# EUROPEAN PATENT APPLICATION

(11) **EP 3 217 615 A1**
(43) Date of publication of application: **13.09.2017**
(21) Application number: 15856568.9
(22) Date of filing: 04.11.2015
(51) Int. Cl.: H04L 12/891, H04L 12/713, H04L 12/717, H04L 12/723, H04L 12/803

(54) **CONTROL DEVICE, COMMUNICATION SYSTEM, AND RELAY DEVICE CONTROL METHOD**

(30) Priority: 05.11.2014 JP 2014225080
(71) Applicant: NEC Corporation, Tokyo 108-8001 (JP)
(72) Inventor: OTAKE, Takahiro, Tokyo 108-8001 (JP)
(74) Representative: Reeve, Nicholas Edward
(86) International application number: PCT/JP2015/081067
(87) International publication number: WO 2016/072424

(57) **Abstract**

The present invention contributes to enrichment in means for achieving a point-to-point communication. A control apparatus is connected to two or more first relay apparatuses which form a trunk with a first external relay apparatus and to a second relay apparatus(es) which is connected to at least one of the first relay apparatuses and which is arranged between a destination apparatus that performs a point-to-point communication [and the first relay apparatuses]. The control apparatus includes: means for controlling the first and second relay apparatuses; means for receiving a request for a configuration about a point-to-point communication, the request including endpoint information about the point-to-point communication; and means for determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).

## Description

### FIELD

### (REFERENCE TO RELATED APPLICATION)

The present invention is based upon and claims the benefit of the priority of Japanese patent application No. 2014-225080, filed on November 5, 2014, the disclosure of which is incorporated herein in its entirety by reference thereto.

The present invention relates to a control apparatus, a communication system, and a relay apparatus control method. In particular, it relates to: a control apparatus that controls relay apparatuses in a centralized manner; a centralized-control-type communication system in which this control apparatus is arranged; and a relay apparatus control method.

### BACKGROUND

PTL 1 and NPL 1 disclose an example of a communication system including packet forwarding apparatuses that forward packets and a path control apparatus that controls packet communication paths by controlling packet forwarding of the packet forwarding apparatuses. In PTL 1, when a packet forwarding apparatus receives a packet for which no packet forwarding rule is stored, the packet forwarding apparatus requests the path control apparatus to generate a packet forwarding rule(s). Upon receiving the request, the path control apparatus generates and sets a packet forwarding rule(s) in the packet forwarding apparatus.

PTL 2 discloses an example of a communication control method that separately performs call setting and connection setting in an ATM (Asynchronous Transfer Mode) network. A maintenance center in PTL 2 includes a network configuration database and notifies an individual node of a destination node number and an outgoing path number. When receiving these numbers, an individual node registers the destination node number as path information in a path information table, along with the outgoing path number. In this way, direct paths are set among all the nodes managed by the maintenance center, and a source node performs call setting on the destination node through the corresponding direct path.

PTL 3 discloses a network relay apparatus having a function of previously forming a backup route in case of a failure when forming a transmission route in response to a request from a receiving terminal. With this function, when a failure actually occurs, the transmission route can promptly be switched to the backup route.

### CITATION LIST

### PATENT LITERATURE

PTL 1: Japanese Patent Kokai Publication No. JP2011-101245A
PTL 2: Japanese Patent Kokai Publication No. JP2004-80434A
PTL 3: Japanese Patent Kokai Publication No. H05-268254A

### NON PATENT LITERATURE

NPL 1: Nick McKeown, and seven others, "OpenFlow: Enabling Innovation in Campus Networks", [online], [searched on October 9, 2014], Internet <URL: http://archive.openflow.org/documents/openflow-wp-latest.pdf>

### SUMMARY

### TECHNICAL PROBLEM

The following analysis has been made based on the present invention. A point-to-point connection is demanded for connecting nodes, for example. In a point-to-point communication, bandwidth guarantee, high quality, and high reliability need to be achieved.

Here, implementation of a point-to-point communication by using the centralized-control-type communication system in PTL 1 or NPL 1 will be assumed. The first problem is that a new communication cannot be started when a failure occurs between a control apparatus (corresponding to the path control apparatus in PTL 1) and a relay apparatus (corresponding to a packet forwarding apparatus in PTL 1). This is because, since the relay apparatus cannot notify the control apparatus of any packets, it will be impossible to set any packet forwarding rules.

The second problem is that the control apparatus needs to wait for requests for packet forwarding rules from the relay apparatuses, also to achieve redundancy or perform load distribution. In addition, since the control apparatus sets packet forwarding rules in an individual relay apparatus per communication unit (flow), the number of communications that can be performed simultaneously is limited to the number of packet forwarding rules that can be registered in the relay apparatus (limited to the size of a flow table). Thus, necessary redundancy or load distribution could not be achieved, too.

It is an object of the present invention to provide a centralized-control-type communication system, a control apparatus, and a relay apparatus control method that can contribute to enrichment in means for achieving a point-to-point communication.

### SOLUTION TO PROBLEM

According to a first aspect, there is provided a control apparatus, connected to two or more first relay apparatuses which form a trunk with a first external relay apparatus and to a second relay apparatus(es) which is connected to at least one of the first relay apparatuses and which is arranged between a destination apparatus that performs a point-to-point communication [and the first relay apparatuses], the control apparatus, comprising: means for controlling the first and second relay apparatuses; means for receiving a request for a configuration about a point-to-point communication, the request including endpoint information about the point-to-point communication; and means for determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).

According to a second aspect, there is provided a communication system, comprising: two or more first relay apparatuses which form a trunk with a first external relay apparatus; a second relay apparatus(es) which is connected to at least one of the first relay apparatuses and which is arranged between a destination apparatus that performs a point-to-point communication and the first relay apparatuses; and a control apparatus which controls the first and second relay apparatuses. In this communication system, the control apparatus comprises: means for receiving a request for a configuration about a point-to-point communication, the request including endpoint information about the point-to-point communication; and means for determining a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).

According to a third aspect, there is provided a relay apparatus control method performed by a control apparatus, which is connected to two or more first relay apparatuses which form a trunk with a first external relay apparatus, which is connected to a second relay apparatus(es) which is connected to at least one of the first relay apparatuses and which is arranged between a destination apparatus that performs a point-to-point communication and the first relay apparatuses, and which controls the first and second relay apparatuses. This relay apparatus control method comprises steps of: receiving a request for a configuration about a point-to-point communication, the request including endpoint information about the point-to-point communication; and determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s). In addition, this method is tied up with a certain machine referred to as the control apparatus that controls the relay apparatuses.

According to a fourth aspect, there is provided a computer program executed by a computer constituting a control apparatus which is connected to two or more first relay apparatuses that form a trunk with a first external relay apparatus, which is connected to a second relay apparatus(es) that is connected to at least one of the first relay apparatuses and that is arranged between a destination apparatus that performs a point-to-point communication and the first relay apparatuses, and which controls the first and second relay apparatuses. This program causes the computer to perform processing for receiving a request for a configuration about a point-to-point communication, the request including endpoint information about the point-to-point communication and processing for determining a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s). The program can be recorded in a computer-readable (non-transient) storage medium. Namely, the present invention can be implemented as a computer program product.

### ADVANTAGEOUS EFFECTS OF INVENTION

The present invention can contribute to enrichment in means for achieving a point-to-point communication. Namely, the present invention can convert a centralized-control-type communication system into a system that can perform a more suitable point-to-point communication.

### BRIEF DESCRIPTION OF THE DRAWINGS

Fig. 1 illustrates a configuration according to an exemplary embodiment of the present invention.
Fig. 2 illustrates a configuration of a communication system according to a first exemplary embodiment of the present invention.
Fig. 3 illustrates a configuration of a control apparatus according to the first exemplary embodiment of the present invention.
Fig. 4 illustrates an example of point-to-point configuration information held in the control apparatus according to the first exemplary embodiment of the present invention.
Fig. 5 is a sequence diagram illustrating an operation of the control apparatus according to the first exemplary embodiment of the present invention.
Fig. 6 illustrates an example of packet forwarding rules set in a relay apparatus according to the first exemplary embodiment of the present invention.
Fig. 7 illustrates an example of packet forwarding rules set in a relay apparatus according to the first exemplary embodiment of the present invention.
Fig. 8 illustrates an example of packet forwarding rules set in a relay apparatus according to the first exemplary embodiment of the present invention.
Fig. 9 is a diagram illustrating a packet forwarding rule setting operation performed by the control apparatus according to the first exemplary embodiment of the present invention.
Fig. 10 illustrates an example of packet forwarding rules set in a relay apparatus according to the first exemplary embodiment of the present invention.
Fig. 11 illustrates an example of packet forwarding rules set in a relay apparatus according to the first exemplary embodiment of the present invention.
Fig. 12 illustrates an example of packet forwarding rules set in a relay apparatus according to the first exemplary embodiment of the present invention.
Fig. 13 is another diagram illustrating the packet forwarding rule setting operation performed by the control apparatus according to the first exemplary embodiment of the present invention.
Fig. 14 is a diagram illustrating an operation performed when a relay apparatus(es) malfunctions in the communication system according to the first exemplary embodiment of the present invention.
Fig. 15 is a diagram illustrating packet forwarding rule rewriting processing performed when the relay apparatus(es) malfunctions in the communication system according to the first exemplary embodiment of the present invention.
Fig. 16 is another diagram illustrating an operation performed when a relay apparatus(es) malfunctions in the communication system according to the first exemplary embodiment of the present invention.
Fig. 17 is another diagram illustrating the packet forwarding rule rewriting processing performed when the relay apparatus(es) malfunctions in the communication system according to the first exemplary embodiment of the present invention.
Fig. 18 is another diagram illustrating the packet forwarding rule rewriting processing performed when the relay apparatus(es) malfunctions in the communication system according to the first exemplary embodiment of the present invention.

### MODES

First, an outline of an exemplary embodiment of the present invention will be described with reference to a drawing. In the following outline, various components are denoted by reference characters for the sake of convenience. Namely, the following reference characters are merely used as examples to facilitate understanding of the present invention, not to limit the present invention to the illustrated modes.

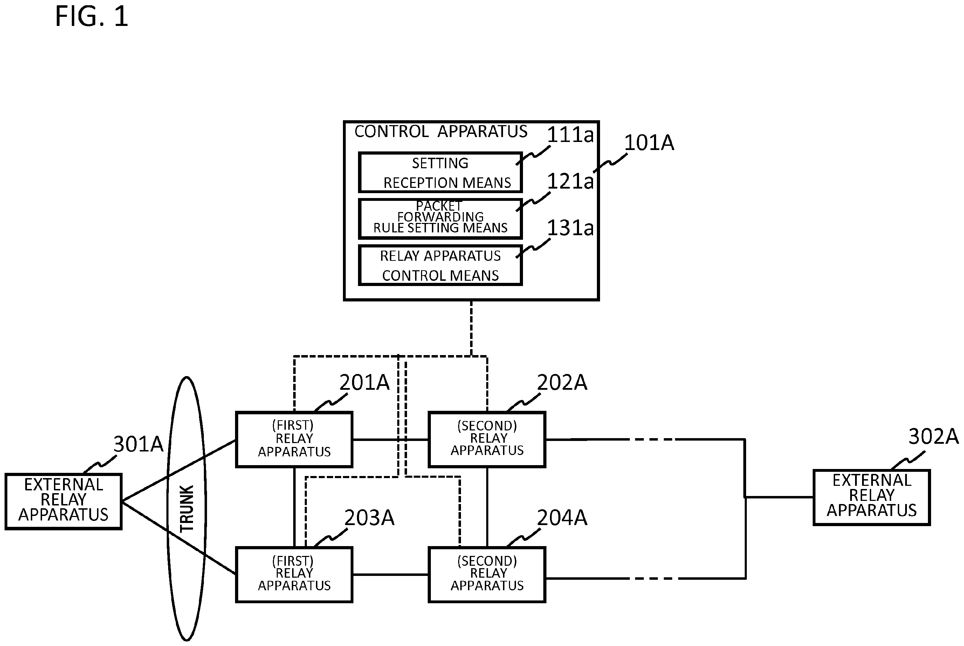

As illustrated in Fig. 1, an exemplary embodiment of the present invention can be realized by a configuration including: two or more first relay apparatuses 201A and 203A which form a trunk with a first external relay apparatus 301A; second relay apparatuses 202A and 204A which are connected to at least one of the first relay apparatuses 201A and 203A and which are arranged between a point-to-point communication destination apparatus (an external relay apparatus 302A) that performs a point-to-point communication and the first relay apparatuses; and a control apparatus 101A which controls the first and second relay apparatuses 201A to 204A.

Hereinafter, the term "trunk" will be used to mean an aggregated link (trunking) achieved by using a method called port trunking or link aggregation. Vendors of network apparatuses call these methods Bonding, Teaming, etc. as the functional names of their respective apparatuses. In any case, redundancy (improvement in availability), load distribution (or balancing), parallelization, etc. are achieved by handling a plurality of links in a single section as a single virtual link.

The control apparatus 101A includes: means 111a for receiving a request for a configuration about a point-to-point communication, the request including endpoint information about the point-to-point communication; and means 121a for determining a path(s) of the point-to-point communication, based on the endpoint information about the point-to-point communication and a packet allocation rule(s) of the first external relay apparatus 301A, and setting a packet forwarding rule(s) for the point-to-point communication which uses the trunk in the first and second relay apparatuses on the path(s).

With the above configuration, when the control apparatus 101A receives a request for a configuration about a point-to-point communication, the control apparatus 101A sets packet forwarding rules in the relay apparatus on a path(s) of the point-to-point communication. Thus, without waiting for a packet forwarding rule setting request from any of the relay apparatuses 201A to 204A, the point-to-point communication can be started. In addition, since it is only necessary to set packet forwarding rules that realize the point-to-point communication between endpoints, the number of packet forwarding rules set in an individual one of the relay apparatuses can be reduced.

### [First exemplary embodiment]

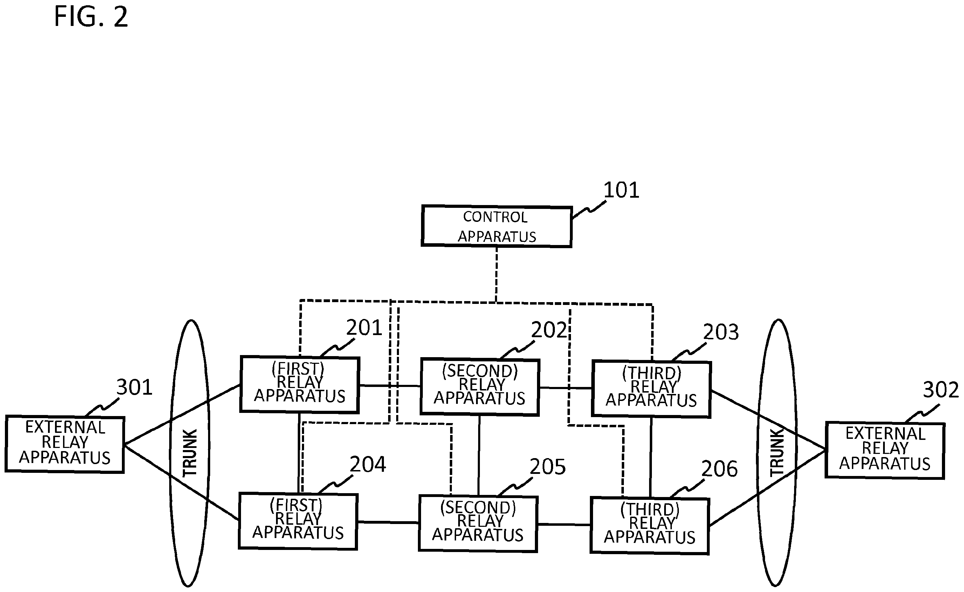

Next, a first exemplary embodiment of the present invention will be described in detail with reference to the drawings. Fig. 2 illustrates a configuration including six relay apparatuses 201 to 206 whose operation relating to packet forwarding can be controlled by external commands and a control apparatus 101 that controls these relay apparatuses 201 to 206.

The relay apparatuses 201 to 206 are connected to the control apparatus 101 via control links, respectively. The relay apparatuses 201 to 206 are connected to each other via data forwarding links. Hereinafter, the relay apparatuses 201 and 204 connected to an external relay apparatus 301 will be referred to as first relay apparatuses. The relay apparatuses 203 and 206 connected to an external relay apparatus 302 will be referred to as third relay apparatuses. The relay apparatuses arranged between the first and third relay apparatuses will be referred to as second relay apparatuses.

The external relay apparatus 301 has a function of forming a trunk by using a plurality of physical ports. Among the ports of the external relay apparatus 301, the ports forming the trunk are connected to the relay apparatuses 201 and 204 via data forwarding links.

Likewise, among a plurality of ports of the external relay apparatus 302, the ports forming a trunk are connected to the relay apparatuses 203 and 206 via data forwarding links.

Hereinafter, the present exemplary embodiment will be described assuming that switches complied with OpenFlow in NPL 1 are used as the relay apparatuses 201 to 206. However, apparatuses other than OpenFlow switches may be used as the relay apparatuses 201 to 206. Alternatively, apparatuses that can specify matching conditions of arbitrary packets by using CLI (command line interface) via Telnet to set packet paths may be used.

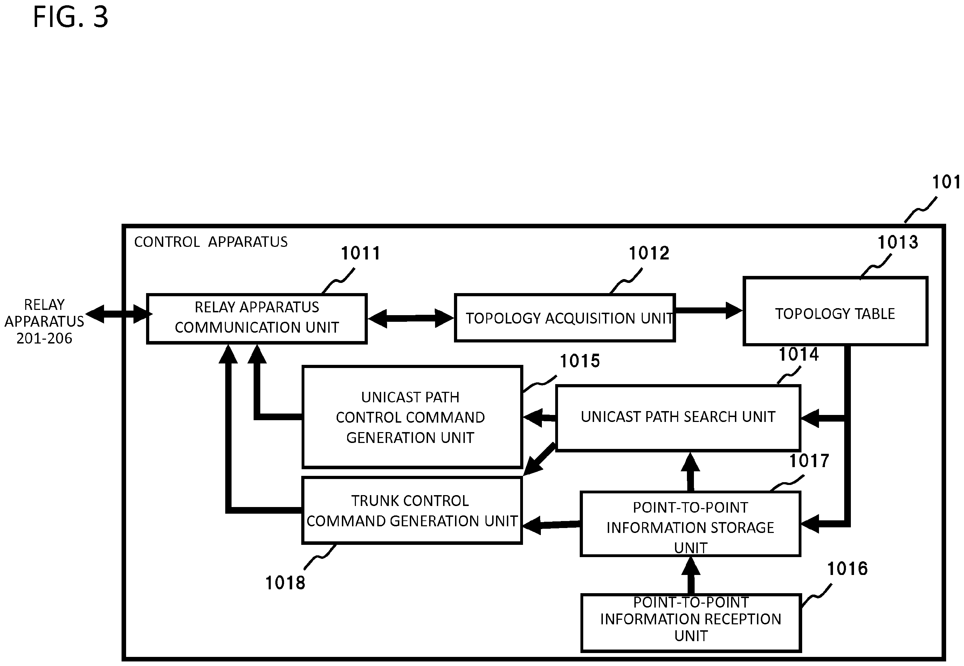

Fig. 3 illustrates a configuration of the control apparatus according to the first exemplary embodiment of the present invention. Fig. 3 illustrates a configuration including a relay apparatus communication unit 1011, a topology acquisition unit 1012, a topology table 1013, a unicast path search unit 1014, a unicast path control command generation unit 1015, a point-to-point information reception unit 1016, a point-to-point information storage unit 1017, and a trunk control command generation unit 1018.

The relay apparatus communication unit 1011 performs control communications with the relay apparatuses 201 to 206. More specifically, the relay apparatus communication unit 1011 establishes control sessions and exchanges control commands with the relay apparatuses 201 to 206. OpenFlow (protocol) may be used for the control commands. Communications may be performed by CLI via Telnet or SNMP (Simple Network Management Protocol).

Via the relay apparatus communication unit 1011, the topology acquisition unit 1012 transmits topology acquisition packets, acquires a topology of the relay apparatuses 201 to 206, and stores the acquired topology in the topology table 1013. The topology can be acquired by causing the relay apparatuses 201 to 206 to transmit neighboring relay apparatus recognition information. A typical example of such protocol for recognition of neighboring nodes among relay apparatuses (switches) is the Link Layer Discovery Protocol. The control apparatus 101 may cause a certain relay apparatus(es) to output a packet(s) including an ID(s) of the relay apparatus(es) and port number(s) from a certain port(s). In such case, by receiving the corresponding packet(s) from an opposite relay apparatus(es), the control apparatus 101 can recognize a connection(s) between (among) the relay apparatus(es). When outputting and receiving packets, the control apparatus can use Packet-out and Packet-in messages of OpenFlow (protocol). Information about the network topology may be set in advance in the topology table 1013.

The unicast path search unit 1014 refers to the topology table 1013 and searches for a unicast path(s) on the relay apparatuses 201 to 206 by using a predetermined calculation algorithm. When a unicast path(s) is calculated, a path different for each pair of relay apparatuses connected to the external relay apparatuses 301 and 302, respectively, may be calculated. Alternatively, a path tree in which a relay apparatus connected to the external relay apparatus 301 or 302 is used as a start or end point may be calculated. For example, a shortest path tree (a typical example of which is Dijkstra's algorithm) can be used as the path calculation method. The number of paths is not limited to one. A different path may be used for each communication unit. When calculating a path, the calculation may be performed by using each one of the relay apparatuses as a start or end point.

The unicast path control command generation unit 1015 generates and transmits control commands via the relay apparatus communication unit 1011, to set packet forwarding rules in the relay apparatuses 201 to 206 on a path(s) found by the unicast path search unit 1014.

The point-to-point information reception unit 1016 receives configuration information about a point-to-point communication(s) (point-to-point configuration information) from a network administrator or the like. The input to the point-to-point information reception unit 1016 can be performed by using CLI (command line interface) or GUI (graphical user interface).

In the present exemplary embodiment, an item of point-to-point configuration information includes a pair of relay apparatuses connected to external relay apparatuses which are the endpoints of the corresponding point-to-point communication and a pair of ports used for the point-to-point communication. A trunk formed by ports of a plurality of relay apparatuses may be specified as the endpoints of the point-to-point communication. In addition to the ports of the relay apparatuses 201 to 206 or a trunk, VLAN IDs (Virtual Local Area Network IDentifiers) may be specified. In this way, point-to-point communications can be performed for only certain VLAN communications.

The point-to-point information storage unit 1017 accumulates the point-to-point configuration information received by the point-to-point information reception unit 1016. When calculating a unicast path for a point-to-point communication, the unicast path search unit 1014 refers to the accumulated point-to-point information.

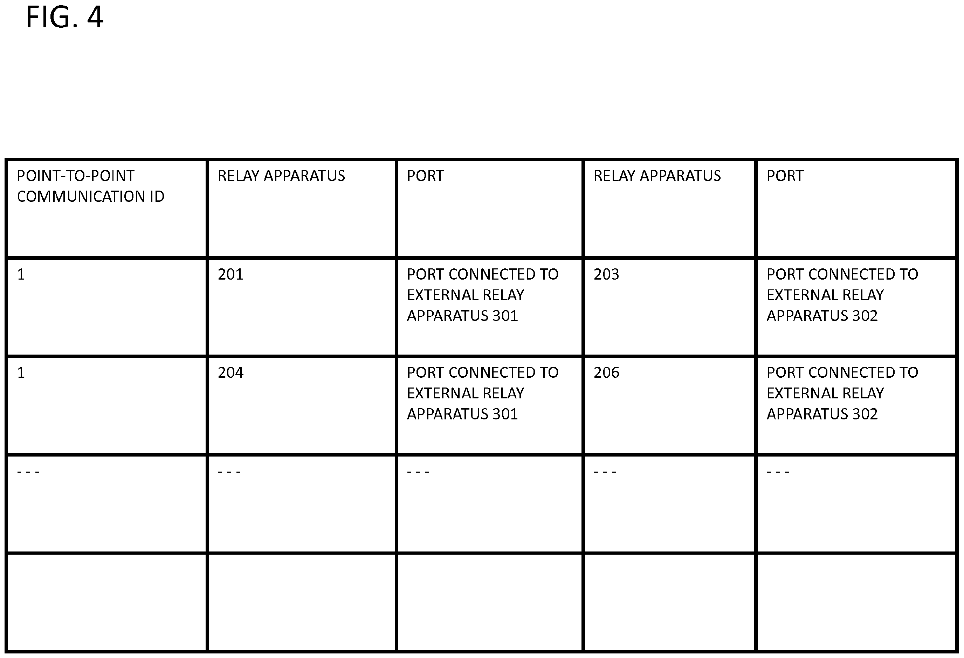

Fig. 4 illustrates an example of the point-to-point configuration information held in the point-to-point information storage unit 1017. In the example in Fig. 4, an ID (point-to-point communication ID) is allocated per point-to-point communication. An ID (point-to-point communication ID) allocated per point-to-point communication is used for identification of the packets that belong to the corresponding point-to-point communication. While the example in Fig. 4 illustrates only entries whose point-to-point communication ID is 1, a plurality of items of point-to-point configuration information may be stored.

Based on a notification from the unicast path search unit 1014, the trunk control command generation unit 1018 generates a trunk control command(s) for the relay apparatuses 201 to 206 and transmits the control command(s) via the relay apparatus communication unit 1011.

In the present exemplary embodiment, data communication paths and control communication paths are separately arranged. However, a single kind of paths may be used for both data and control operations. In addition, in the present exemplary embodiment, six relay apparatuses and two external relay apparatuses are used, and two relay apparatuses form a trunk. However, these numbers are used as an example to facilitate the description. The present invention is not particularly limited to these numbers.

In addition, an individual one of the units (processing means) of the control apparatus 101 or 101A illustrated in Fig. 1 or 3 may be realized by a computer program that causes a computer constituting the corresponding control apparatus to use its hardware and perform the above processing.

Next, an operation according to the present exemplary embodiment will be described in detail with reference to the drawings. First, an operation of how the control apparatus 101 sets point-to-point communication paths (packet forwarding rules) in the relay apparatuses 201 to 206 will be described.

The following description assumes that the control apparatus 101 has received point-to-point communication configuration information between a trunk formed by the relay apparatuses 201 and 204 and a trunk formed by the relay apparatuses 203 and 206 in Fig. 2. More specifically, the following description assumes that, as illustrated in Fig. 4, the control apparatus 101 has received configuration information about a point-to-point communication in which the relay apparatuses 201 and 203 are used as the endpoints and configuration information about a point-to-point communication in which the relay apparatuses 204 and 206 are used as the endpoints.

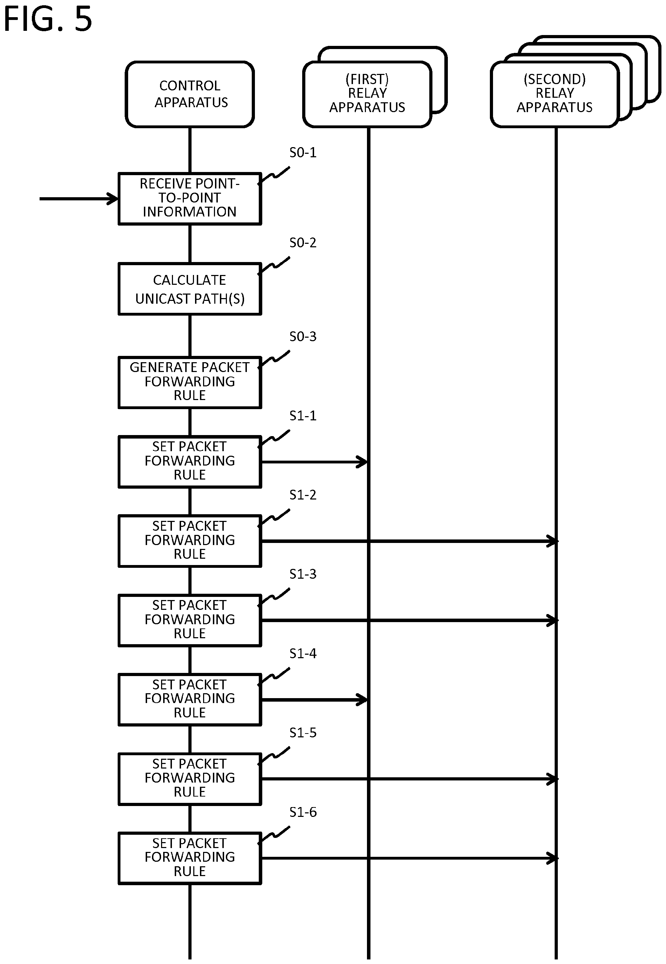

Fig. 5 is a sequence diagram illustrating an operation of the control apparatus. As illustrated in Fig. 5, first, the control apparatus 101 receives point-to-point communication configuration information (step S0-1). The control apparatus 101 refers to the point-to-point communication configuration information and recognizes that, depending on the point-to-point communication, packets are classified to the relay apparatus 201 or 204 and to the relay apparatus 203 or 206. Next, the control apparatus 101 calculates a unicast path between the relay apparatuses 201 and 203 and a unicast path between the relay apparatuses 204 and 206 (step S0-2). The following description assumes that the control apparatus 101 has calculated a unicast path along the relay apparatuses 201 to 203 and a unicast path along the relay apparatuses 204 to 206.

The control apparatus 101 generates packet forwarding rules set in the relay apparatuses on the two unicast paths (step S0-3).

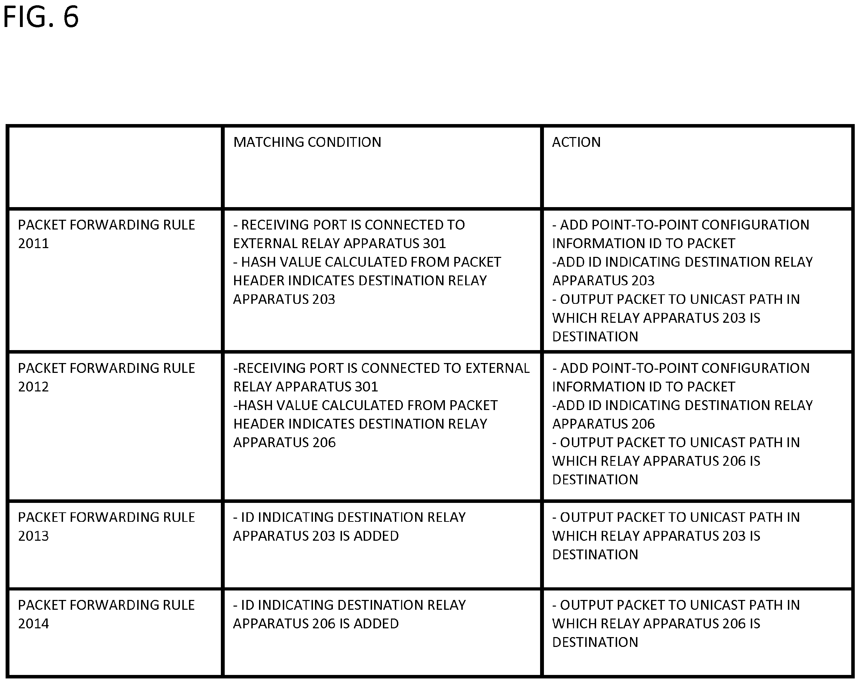

Next, the control apparatus 101 sets packet forwarding rules generated in step S0-3 in the relay apparatus 201 (step S1-1). Fig. 6 illustrates an example of the packet forwarding rules set in the relay apparatus 201. The relay apparatus 201 forwards packets in accordance with packet forwarding rules 2011 to 2014 in Fig. 6.

The packet forwarding rule 2011 in Fig. 6 defines processing contents applied to packets that are received via a port connected to the external relay apparatus 301 and that have a packet header from which a hash value indicating the destination relay apparatus 203 is calculated. The processing contents of the packet forwarding rule 2011 in Fig. 6 define that the relay apparatus 201 adds a point-to-point communication ID (for example, "1") and an ID indicating the destination relay apparatus 203 to a matching packet and outputs the matching packet to the unicast path that leads to the destination relay apparatus 203 (for example, to a port connected to the relay apparatus 202).

Likewise, the packet forwarding rule 2012 in Fig. 6 defines processing contents applied to packets that are received via a port connected to the external relay apparatus 301 and that have a packet header from which a hash value indicating the destination relay apparatus 206 is calculated. The processing contents of the packet forwarding rule 2012 in Fig. 6 define that the relay apparatus 201 adds a point-to-point communication ID (for example, "1") and an ID indicating the destination relay apparatus 206 to a matching packet and outputs the matching packet to the unicast path that leads to the destination relay apparatus 206 (for example, to a port connected to the relay apparatus 204).

As defined by the packet forwarding rules 2011 and 2012 in Fig. 6, the relay apparatus 201 selects the destination relay apparatus, namely, one of the relay apparatuses 203 and 206 forming a trunk, based on a hash value calculated from the packet header. In this way, it is possible to achieve load balancing of packet forwarding between relay apparatuses and between a relay apparatus and an external relay apparatus.

Examples of the method for calculating a hash value from a packet header includes a method for calculating a hash value from the source MAC (Media Access Cotrol) address, the destination MAC address, and the VLAN ID of an Ethernet header (hereinafter, "Ethernet" is a registered trademark). The method for referring to a certain bit value in a certain header of an Ethernet header may be used. In addition, the allocation (classification) destination selection rules (hash value calculation method) in the external relay apparatus 301 may be used as the rule (the hash value calculation method) for allocating packets into the relay apparatus 203 or 206.

In addition, a point-to-point communication ID and an ID indicating the destination relay apparatus ID may be allocated to a matching packet by encapsulating the matching packet with an Ethernet frame based on MAC in MAC and storing the IDs in the MAC address in the outer Ethernet header. Alternatively, a VLAN Tag may be added based on Q in Q, and the IDs may be stored in added VLAN headers. Alternatively, an MPLS (Multi Protocol Label Switching) header may be added, and the IDs may be stored in labels in the added MPLS header.

In addition, the control apparatus 101 sets packet forwarding rules 2013 and 2014 in Fig. 6 in the relay apparatus 201. The packet forwarding rule 2013 instructs the relay apparatus 201 to forward a packet, to which the ID indicating the destination relay apparatus 203 is added, along the unicast path that leads to the destination relay apparatus 203. Likewise, the packet forwarding rule 2014 instructs the relay apparatus 201 to forward a packet, to which the ID indicating the destination relay apparatus 206 is added, along the unicast path that leads to the destination relay apparatus 206. These are also used for causing the relay apparatus 201 to perform packet forwarding along alternative paths.

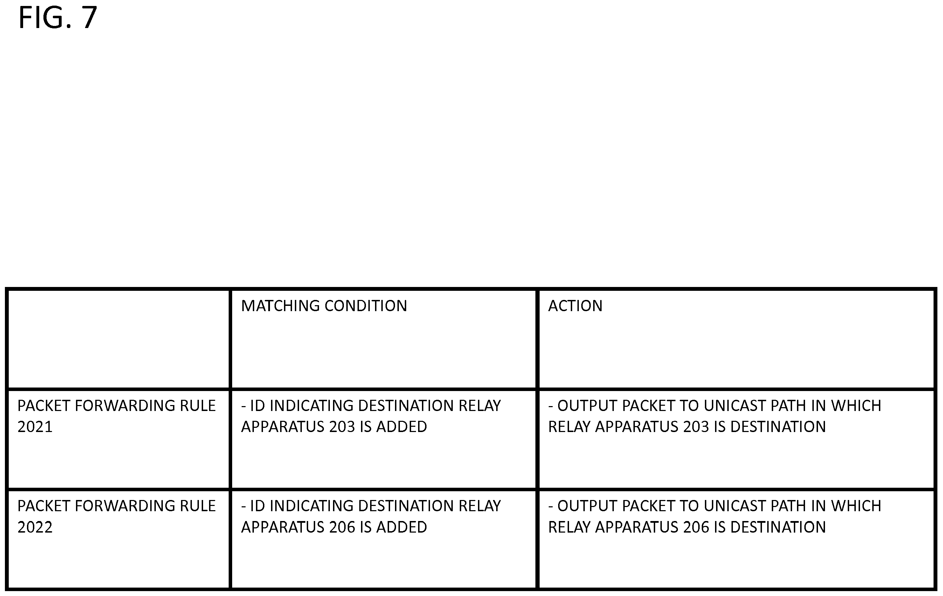

Next, the control apparatus 101 sets packet forwarding rules generated in step S0-3 in the relay apparatus 202 (step S1-2). Fig. 7 illustrates an example of the packet forwarding rules set in the relay apparatus 202. The relay apparatus 202 forwards packets in accordance with packet forwarding rules 2021 and 2022 in Fig. 7.

The packet forwarding rule 2021 in Fig. 7 instructs the relay apparatus 202 to forward a packet, to which the ID indicating the destination relay apparatus 203 is added, along the unicast path that leads to the destination relay apparatus 203. Likewise, the packet forwarding rule 2022 instructs the relay apparatus 202 to forward a packet, to which the ID indicating the destination relay apparatus 206 is added, along the unicast path that leads to the destination relay apparatus 206. These are also used for causing the relay apparatus 202 to perform packet forwarding along alternative paths.

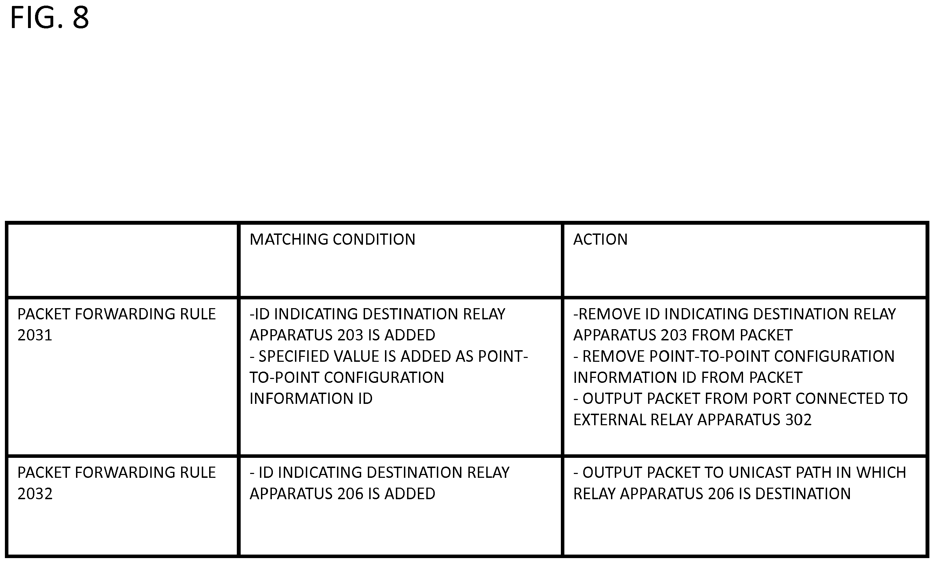

Next, the control apparatus 101 sets packet forwarding rules generated in step S0-3 in the relay apparatus 203 (step S1-3). Fig. 8 illustrates an example of the packet forwarding rules set in the relay apparatus 203. The relay apparatus 203 forwards packets in accordance with packet forwarding rules 2031 and 2032 in Fig. 8.

The packet forwarding rule 2031 in Fig. 8 defines processing contents applied to packets to which the ID indicating the destination relay apparatus 203 and a value specified as a point-to-point communication ID (for example, "1") are added. The processing contents of the packet forwarding rule 2031 in Fig. 8 define that the relay apparatus 203 removes the ID indicating the destination relay apparatus 203 and the point-to-point communication ID from a matching packet and outputs the matching packet from a port connected to the external relay apparatus 302.

The packet forwarding rule 2032 in Fig. 8 instructs the relay apparatus 203 to forward a packet, to which the ID indicating the destination relay apparatus 206 is added, along the unicast path that leads to the destination relay apparatus 206. This packet forwarding rule 2032 is used for causing the relay apparatus 203 to perform packet forwarding along an alternative path. For example, this packet forwarding rule 2032 is also used when a failure occurs between the relay apparatuses 205 and 206 and a packet addressed to the destination relay apparatus 206 is forwarded from the relay apparatus 202 on an alternative path.

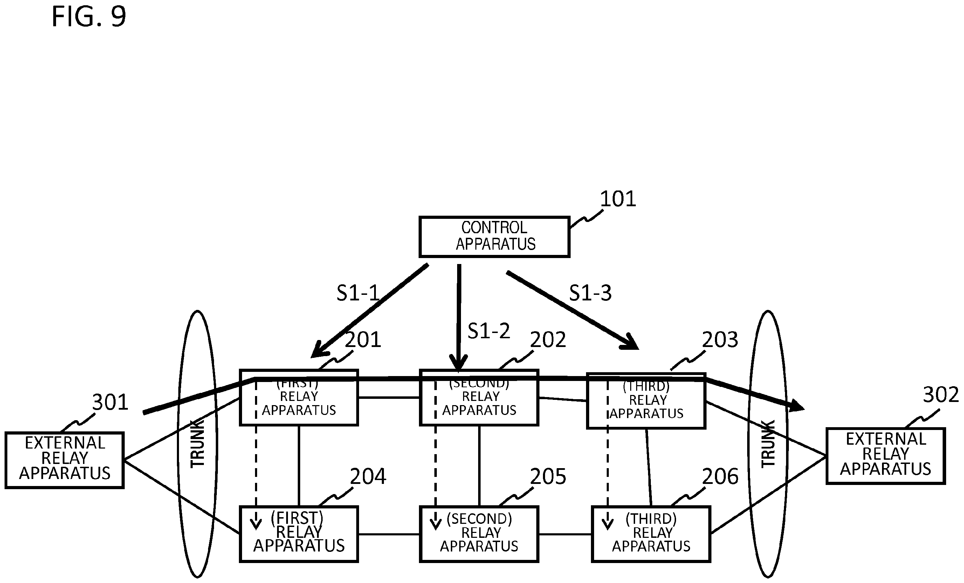

After the packet forwarding rules are set in the relay apparatus 201 to 203 as described above, as illustrated in Fig. 9, for example, packets having a packet header from which a hash value indicating the destination relay apparatus 203 is calculated can be forwarded on the path along the relay apparatuses 201 to 203. In addition, of the point-to-point communications, packets having a packet header from which a hash value indicating the destination relay apparatus 206 is calculated are forwarded on the unicast path in which the relay apparatus 206 is the destination. In the process of forwarding a matching packet that belongs to any of the point-to-point communications, the matching packet is allocated an ID indicating the corresponding destination relay apparatus and a point-to-point communication ID. The ID indicating the corresponding destination relay apparatus is checked by a subsequent relay apparatus to determine a forwarding destination, and the point-to-point communication ID can be used by the most downstream relay apparatus to determine the point-to-point communication and to change the output port.

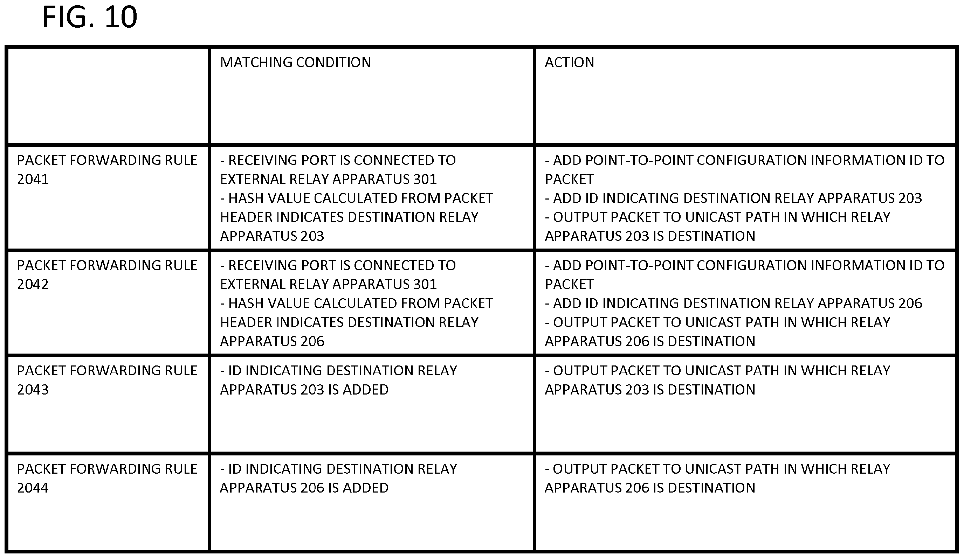

Likewise, the control apparatus 101 sets packet forwarding rules generated in step S0-3 in the relay apparatus 204 (step S1-4). Fig. 10 illustrates an example of the packet forwarding rules set in the relay apparatus 204. The relay apparatus 204 forwards packets in accordance with packet forwarding rules 2041 to 2044 in Fig. 10. Specific contents are equivalent to those of the packet forwarding rules 2011 to 2014 in Fig. 6, description thereof will be omitted.

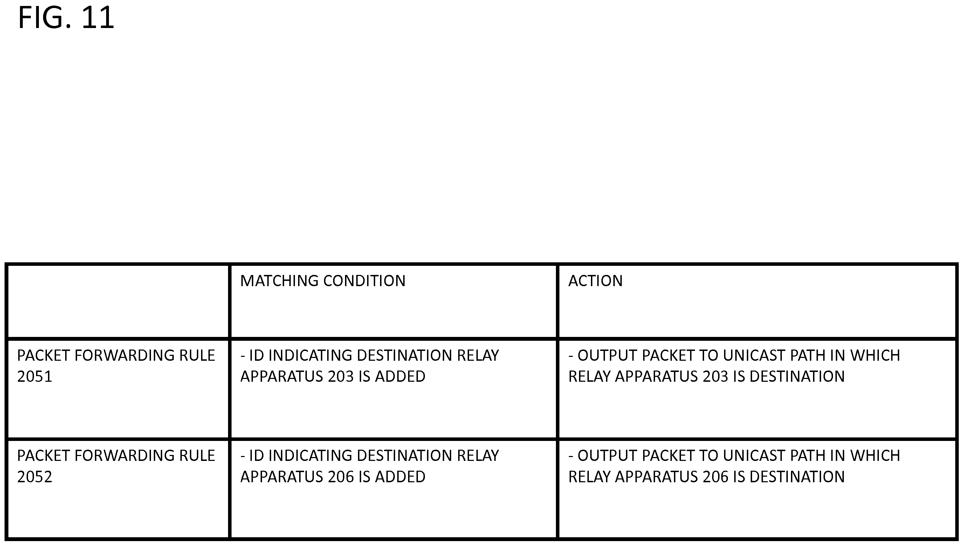

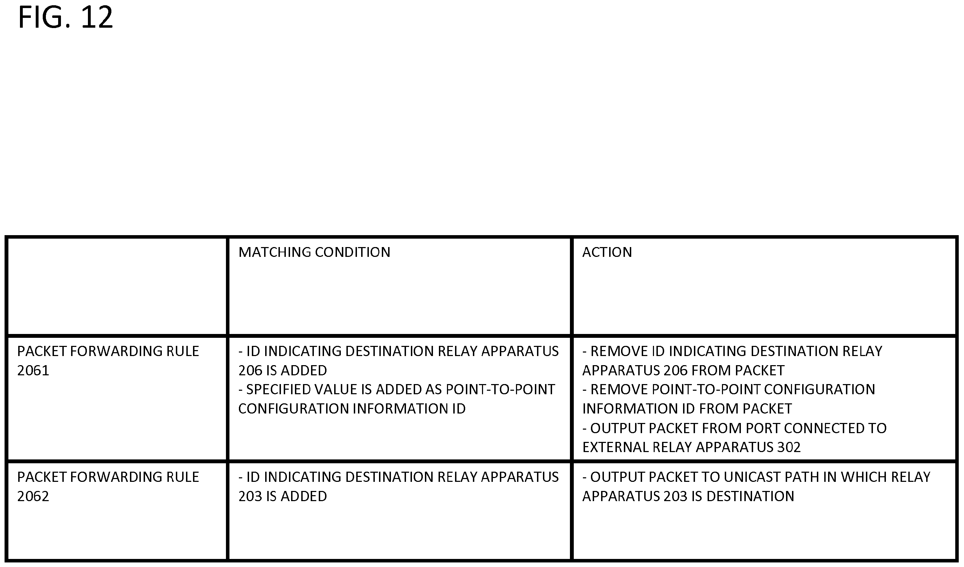

Likewise, the control apparatus 101 sets packet forwarding rules generated in step S0-3 in the relay apparatuses 205 and 206 (step S1-5 and S1-6). Figs. 11 and 12 illustrate examples of the packet forwarding rules set in the relay apparatuses 205 and 206, respectively. The relay apparatus 205 forwards packets in accordance with packet forwarding rules 2051 and 2052 in Fig. 11. Likewise, the relay apparatus 206 forwards packets in accordance with packet forwarding rules 2061 and 2062 in Fig. 12. Specific contents are equivalent to those of the packet forwarding rules 2021 and 2022 and the packet forwarding rules 2031 and 2032 in Figs. 7 and 8, description thereof will be omitted.

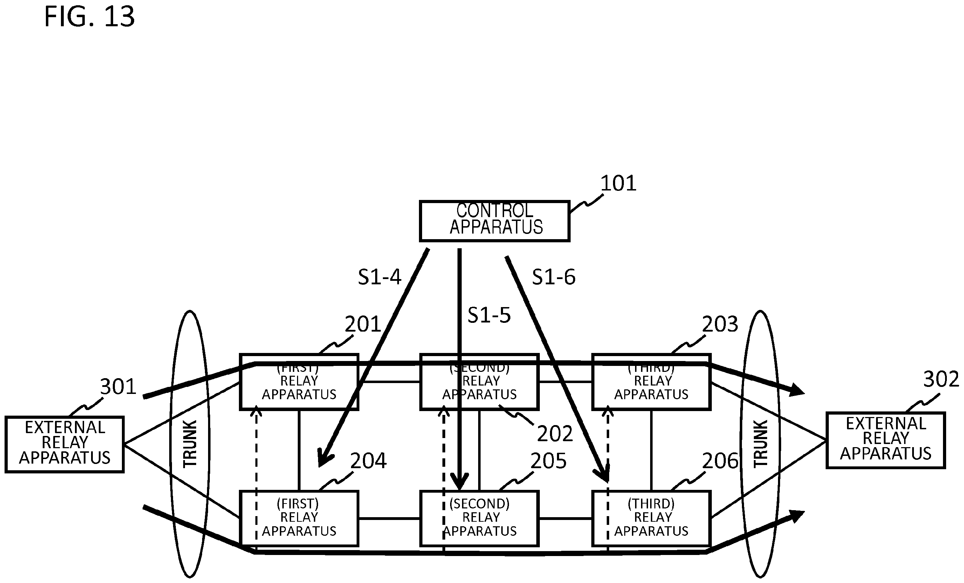

After the packet forwarding rules are set in the relay apparatus 204 to 206 as described above, as illustrated in Fig. 13, for example, packets having a packet header from which a hash value indicating the destination relay apparatus 206 is calculated can be forwarded on the path along the relay apparatuses 204 to 206. In addition, of the point-to-point communications, packets having a packet header from which a hash value indicating the destination relay apparatus 203 is calculated are forwarded on the unicast path in which the relay apparatus 203 is the destination. In the process of forwarding a matching packet that belongs to any of the point-to-point communications, the matching packet is allocated an ID indicating the corresponding destination relay apparatus and a point-to-point communication ID. The ID indicating the corresponding destination relay apparatus is checked by a subsequent relay apparatus to determine a forwarding destination, and the point-to-point communication ID can be used by the most downstream relay apparatus to determine the point-to-point communication and to change the output port.

While specific packet forwarding rules will not be described, the control apparatus 101 calculates a path(s) for forwarding packets received by the relay apparatus 203 from the external relay apparatus 302 to the relay apparatus 201 or 204 and sets relevant packet forwarding rules in accordance with the same procedure. The control apparatus 101 also calculates a path(s) for forwarding packets received by the relay apparatus 206 from the external relay apparatus 302 to the relay apparatus 201 or 204 and sets relevant packet forwarding rules. In this way, a bidirectional point-to-point communication between arbitrary two points can be performed.

Next, an operation performed when a failure occurs between the relay apparatuses 202 and 203 in Fig. 2 will be described. In this operation, the path is switched to an alternative path, to continue the ongoing point-to-point communication.

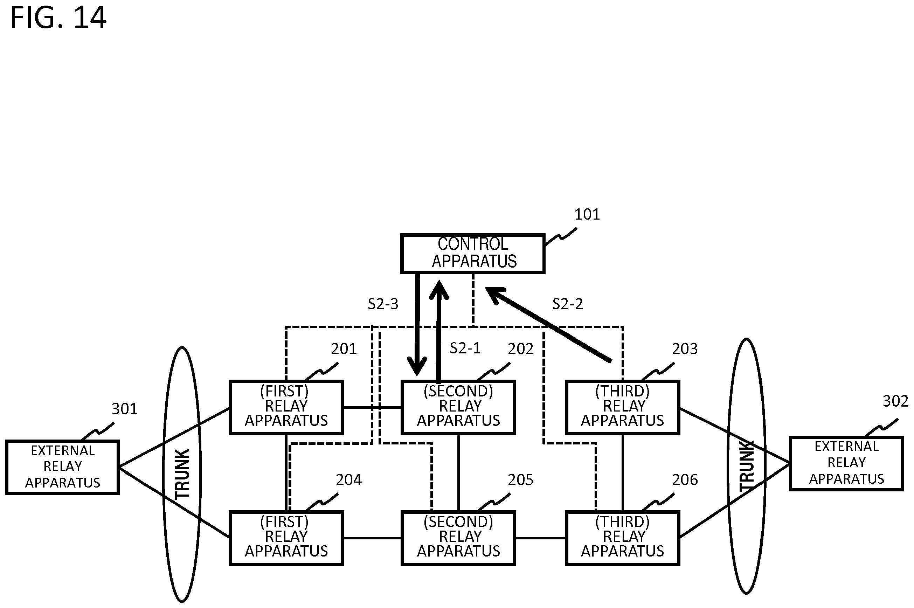

Fig. 14 is a diagram illustrating an operation performed when a failure occurs between the relay apparatuses 202 and 203. When a failure occurs between the relay apparatuses 202 and 203, the relay apparatus 202 notifies the control apparatus 101 of a port malfunction (step S2-1). The relay apparatus 203 also notifies the control apparatus 101 of a port malfunction (step S2-2). To detect a failure between relay apparatuses, a port malfunction detection mechanism unique to a relay apparatus may be used. Alternatively, as in the acquisition of the topology, relay apparatuses may exchange information about their neighboring relay apparatuses. Alternatively, the control apparatus may instruct relay apparatuses to transmit a packet and detect an error (non-delivery of packet).

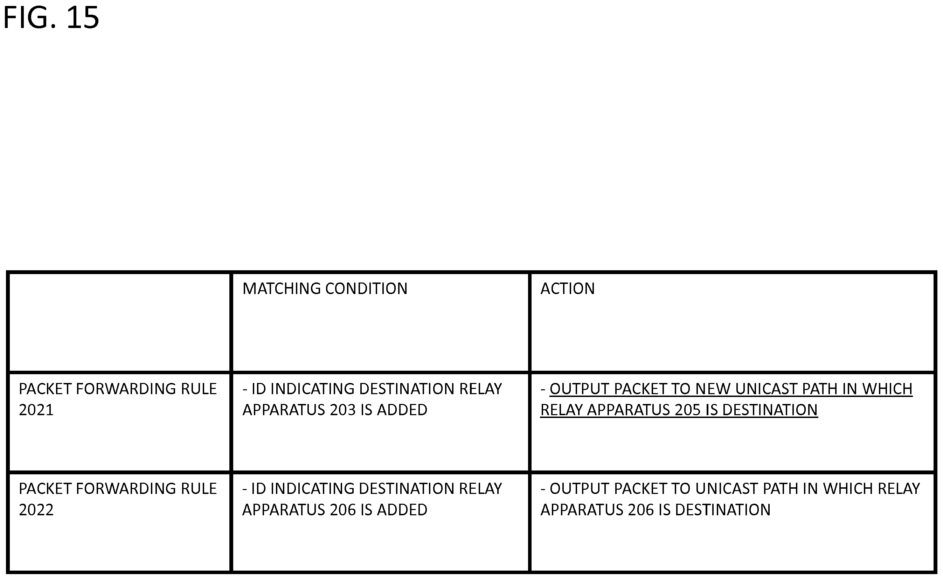

When receiving the notification, the control apparatus 101 updates the topology table 1013 based on the content of the notification and recalculates the unicast path affected by the failure. Based on the recalculated result, the control apparatus 101 instructs the relay apparatus 202 to change a packet forwarding rule, as illustrated in Fig. 15 (step S2-3). The difference between the packet forwarding rules illustrated in Fig. 7 and the packet forwarding rules illustrated in Fig. 15 is that the output port in the action of a packet forwarding rule 2021 has been changed to a port connected to a relay apparatus (for example, the relay apparatus 205) on the recalculated unicast path.

Alternatively, the corresponding packet forwarding rule in Fig. 15 that instructs forwarding along the alternative path when an output port failure occurs may previously be set in the relay apparatus. In such case, by causing the relay apparatus to remove the packet forwarding rule that corresponds to the path in which the failure has been detected, bypass processing can be performed without an instruction from the control apparatus 101. Alternatively, the relay apparatus may be provided with a function of rewriting the corresponding packet forwarding rule in Fig. 7 to the corresponding packet forwarding rule in Fig. 15 when a failure is detected. By using any one of these configurations, bypass processing can be performed even when a failure occurs between the control apparatus 101 and a relay apparatus.

Next, an operation performed when a failure occurs between the relay apparatuses 202 and 203 and between the relay apparatuses 203 and 206 in Fig. 2. In this operation, the path is switched to an alternative path, to continue the ongoing point-to-point communication.

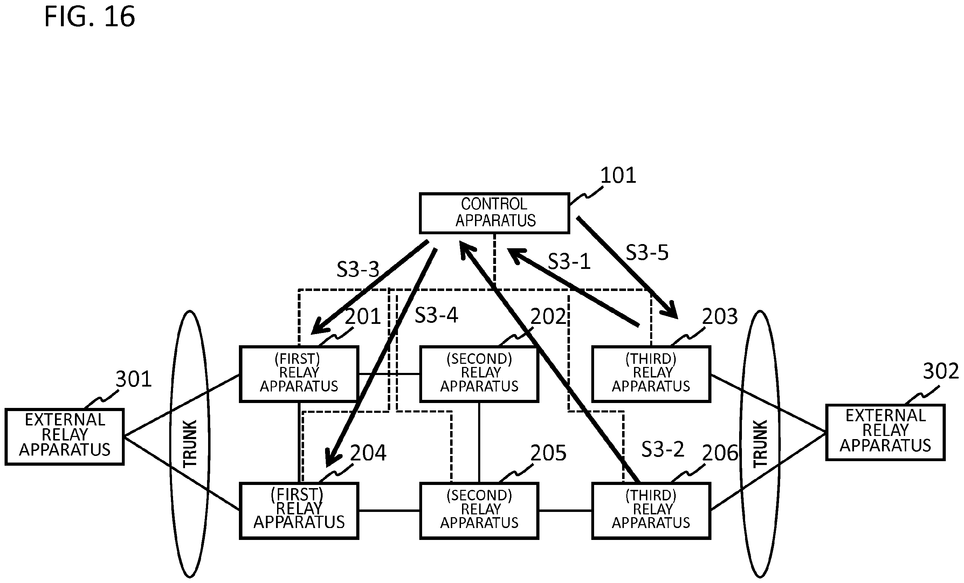

Fig. 16 illustrates an operation performed when a failure occurs between the relay apparatuses 203 and 206, in addition to a failure between the relay apparatuses 202 and 203. If a failure occurs between the relay apparatuses 203 and 206 in addition to a failure between the relay apparatuses 202 and 203, the relay apparatus 203 notifies the control apparatus 101 of a port malfunction (step S3-1). The relay apparatus 206 also notifies the control apparatus 101 of a port malfunction (step S3-2).

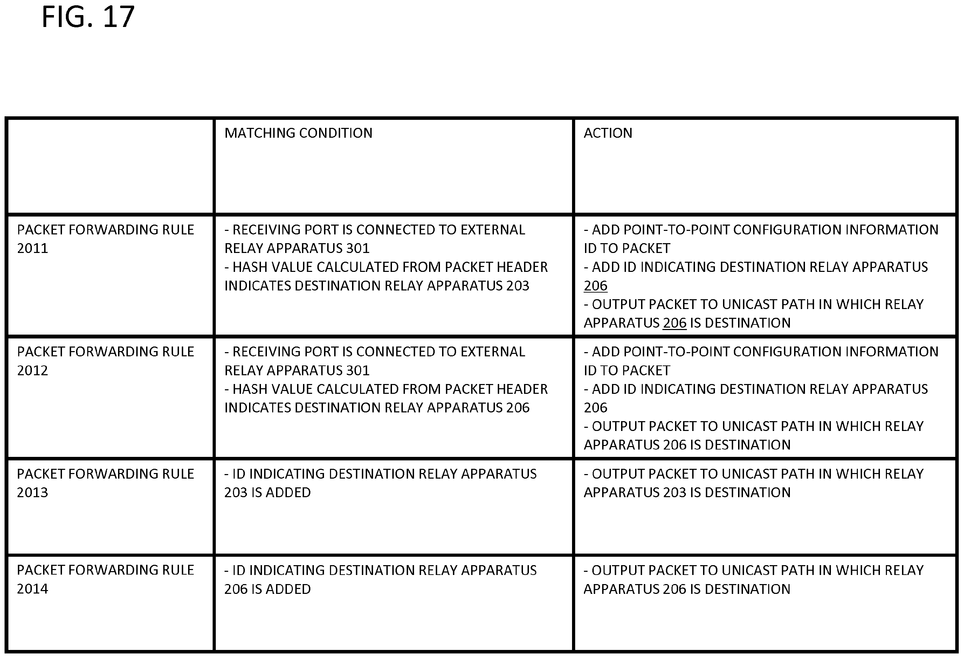

When receiving the notification, the control apparatus 101 updates the topology table 1013 based on the content of the notification and recalculates a unicast path affected by the failure. Based on the recalculated result, the control apparatus 101 instructs the relay apparatus 201 to change a packet forwarding rule, as illustrated in Fig. 17 (step S3-3). In accordance with a packet forwarding rule 2011 in Fig. 17, the destination relay apparatuses cannot be classified into the relay apparatuses 203 and 206 (because the relay apparatus 203 does not exist on the path from the external relay apparatus 301 to the external relay apparatus 302). Thus, irrespective of the hash value calculated from the packet header of a received packet, an ID indicating the relay apparatus 206 is set as the ID indicating the destination relay apparatus in the received packet.

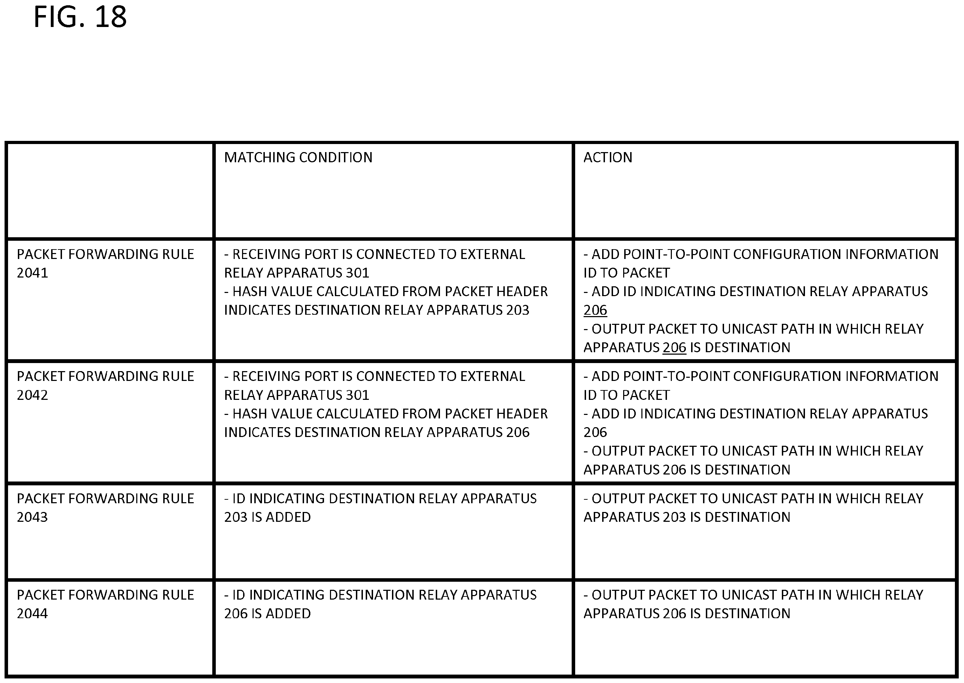

Likewise, the control apparatus 101 instructs the relay apparatus 204 to change a packet forwarding rule as illustrated in Fig. 18 (step S3-4). The destination relay apparatuses cannot be classified into the relay apparatuses 203 and 206 in accordance with a packet forwarding rule 2041 in Fig. 18. Thus, irrespective of the hash value calculated from the packet header of a received packet, an ID indicating the relay apparatus 206 is set as the ID indicating the destination relay apparatus in the received packet.

In addition, the control apparatus 101 instructs the relay apparatus 203 to perform port down of a port that forms the trunk connected to the external relay apparatus 302 (step S3-5). After the port down performed by the relay apparatus 203, the external relay apparatus 302 is notified of the port down. As a result, the external relay apparatus 302 will not forward packets to the relay apparatus 203, which does not have any paths to the other relay apparatus.

In addition, in the example in Figs. 17 and 18, while the packet forwarding rules 2013 and 2043 that define processing on packets in which the destination relay apparatus is the relay apparatus 203 have not been changed, the actions in the packet forwarding rules 2013 and 2043 may be changed so that the relay apparatuses 201 and 204 output packets to unicast paths in which the relay apparatus 206 is the destination, respectively, as needed. In addition, the control apparatus 101 may transmit a predetermined notification to the external relay apparatus 301, etc. so that transmission of packets in which the destination relay apparatus is the relay apparatus 203 is prevented.

As described above, the present exemplary embodiment not only realizes a point-to-point communication but also enables a continuous communication by using an alternative path even when multiple failures occur.

The advantageous effects of the present exemplary embodiment will be summarized as follows. The first advantageous effect is that a point-to-point communication can be realized without using a protocol that prevents a loop such as Spanning Tree Protocol in a packet forwarding network formed by a plurality of relay apparatuses.

The second advantageous effect is that, when a communication occurs, the communication can be performed promptly since necessary packet forwarding rules are set in relevant relay apparatuses prior to the communication (see Fig. 5). This means that the communication can be started without causing load between the relay apparatuses and the control apparatus. In addition, according to the present exemplary embodiment, when a failure occurs between a relay apparatus and the control apparatus, a new communication can be performed.

The third advantageous effect is that a point-to-point communication can be performed between trunks. Namely, redundancy and load balancing can be realized in a communication between relay apparatuses in the point-to-point communication and between an external relay apparatus and a relay apparatus.

While an individual exemplary embodiment of the present invention has thus been described, the present invention is not limited thereto. Further variations, substitutions, or adjustments can be made without departing from the basic technical concept of the present invention. For example, the configurations of the networks and elements and specific examples of the packet forwarding rules illustrated in the drawings are used only as examples to facilitate understanding of the present invention. Namely, the present invention is not limited to what is illustrated in the drawings.

For example, while the above exemplary embodiment has been described assuming that the endpoints of a point-to-point communication are arranged between trunks, a point-to-point communication can also be performed between ports of relay apparatuses or between a port of a relay apparatus and a trunk.

For example, VLAN IDs may be included in the point-to-point configuration information according to the above exemplary embodiment (see Fig. 4). In this way, since VLAN IDs can be added to the matching conditions in the packet forwarding rules registered in the relay apparatuses in step S1-1 and steps thereafter, a point-to-point communication per VLAN can also be realized. When a point-to-point communication per VLAN is performed, by adding processing for rewriting a VLAN ID to the action in a packet forwarding rule indicating outputting of a packet from a relay apparatus to an external relay apparatus, the VLAN ID can be changed at an endpoint of the point-to-point communication.

Finally, suitable modes of the present invention will be summarized.

### [Mode 1]

### (See the control apparatus according to the above first aspect)

### [Mode 2]

The control apparatus according to mode 1,
wherein the control apparatus is connected to two or more third relay apparatuses which are arranged between the destination apparatus that performs the point-to-point communication and the second relay apparatus(es) and which forms a second trunk with a second external relay apparatus, and
wherein the control apparatus sets a packet forwarding rule(s) which uses the two trunks in the first to third relay apparatuses.

### [Mode 3]

The control apparatus according to mode 2,
wherein the control apparatus instructs at least one of the first relay apparatuses which are connected to the first external relay apparatus to add information for identification of the point-to-point communication to a packet(s) that belongs to the point-to-point communication, and
wherein the control apparatus instructs at least one of the third relay apparatuses which are connected to the second external relay apparatus to determine an output port(s) based on the information for identification of the point-to-point communication and to remove the information for identification of the point-to-point communication from the packet(s) that belongs to the point-to-point communication.

### [Mode 4]

The control apparatus according to any one of modes 1 to 3, further comprising:
means for recalculating a path(s) for the packet(s) that belongs to the point-to-point communication based on change of a network topology formed by the relay apparatuses and setting a packet forwarding rule(s) for forwarding the packet(s) that belongs to the point-to-point communication along the recalculated path(s) in a relay apparatus(es) on the recalculated path(s).

### [Mode 5]

The control apparatus according to any one of modes 2 to 4, wherein the control apparatus instructs at least one of the first and third relay apparatuses removed from the path(s) of the point-to-point communication by change of the network topology formed by the relay apparatuses to perform port down of a port(s) that belongs to the trunk(s) used by the point-to-point communication.

### [Mode 6]

### (See the communication system according to the above second aspect)

### [Mode 7]

The communication system according to mode 6,
wherein two or more third relay apparatuses which form a second trunk with a second external relay apparatus between the destination apparatus that performs the point-to-point communication and the second relay apparatus(es), and
wherein the control apparatus sets a packet forwarding rule(s) which uses the two trunks in the first to third relay apparatuses.

### [Mode 8]

The communication system according to mode 7,
wherein the control apparatus instructs at least one of the first relay apparatuses which are connected to the first external relay apparatus to add information for identification of the point-to-point communication to a packet(s) that belongs to the point-to-point communication, and
wherein the control apparatus instructs at least one of the third relay apparatuses which are connected to the second external relay apparatus to determine an output port(s) based on the information for identification of the point-to-point communication and to remove the information for identification of the point-to-point communication from the packet(s) that belongs to the point-to-point communication.

### [Mode 9]

The communication system according to any one of modes 6 to 8, wherein the control apparatus further comprises: means for recalculating a path(s) for the packet(s) that belongs to the point-to-point communication based on change of a network topology formed by the relay apparatuses and setting a packet forwarding rule(s) for forwarding the packet(s) that belongs to the point-to-point communication along the recalculated path(s) in a relay apparatus(es) on the recalculated path(s).

### [Mode 10]

The communication system according to any one of modes 7 to 9, wherein the control apparatus instructs at least one of the first and third relay apparatuses removed from the path(s) of the point-to-point communication by change of the network topology formed by the relay apparatuses to perform port down of a port(s) that belongs to the trunk(s) used by the point-to-point communication.

### [Mode 11]

### (See the relay apparatus control method according to the above third aspect)

### [Mode 12]

### (See the program according to the above fourth aspect)

The above modes 11 and 12 can be expanded to modes 2 to 5 in the same way as mode 1 is expanded to modes 2 to 5.

The disclosure of the above PTLs and NPL is incorporated herein by reference thereto. Variations and adjustments of the exemplary embodiments and examples are possible within the scope of the overall disclosure (including the claims) of the present invention and based on the basic technical concept of the present invention. Various combinations and selections of various disclosed elements (including the elements in each of the claims, examples, exemplary embodiments, examples, drawings, etc.) are possible within the scope of the disclosure of the present invention. Namely, the present invention of course includes various variations and modifications that could be made by those skilled in the art according to the overall disclosure including the claims and the technical concept. The description discloses numerical value ranges. However, even if the description does not particularly disclose arbitrary numerical values or small ranges included in the ranges, these values and ranges should be deemed to have been specifically disclosed.

### REFERENCE SIGNS LIST

- 101, 101A: control apparatus
- 111a: setting reception means
- 121a: packet forwarding rule setting means
- 131a: relay apparatus control means
- 201, 201A, 203A, 204: (first) relay apparatus
- 202, 202A, 204A, 205: (second) relay apparatus
- 203, 206: (third) relay apparatus
- 301, 302, 301A, 302A: external relay apparatus
- 1011: relay apparatus communication unit
- 1012: topology acquisition unit
- 1013: topology table
- 1014: unicast path search unit
- 1015: unicast path control command generation unit
- 1016: point-to-point information reception unit
- 1017: point-to-point information storage unit
- 1018: trunk control command generation unit
- 2011 to 2062: packet forwarding rule

## Claims

1. A control apparatus,
connected to two or more first relay apparatuses which form a trunk with a first external relay apparatus and to a second relay apparatus(es) which is connected to at least one of the first relay apparatuses and which is arranged between a destination apparatus that performs a point-to-point communication [and the first relay apparatuses], the control apparatus, comprising:
means for controlling the first and second relay apparatuses;
means for receiving a request for a configuration about a point-to-point communication, the request including endpoint information about the point-to-point communication; and
means for determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).

2. The control apparatus according to claim 1,
wherein the control apparatus is connected to two or more third relay apparatuses which are arranged between the destination apparatus that performs the point-to-point communication and the second relay apparatus(es) and which forms a second trunk with a second external relay apparatus, and
wherein the control apparatus sets a packet forwarding rule(s) which uses the two trunks in the first to third relay apparatuses.

3. The control apparatus according to claim 2,
wherein the control apparatus instructs at least one of the first relay apparatuses which are connected to the first external relay apparatus to add information for identification of the point-to-point communication to a packet(s) that belongs to the point-to-point communication, and
wherein the control apparatus instructs at least one of the third relay apparatuses which are connected to the second external relay apparatus to determine an output port(s) based on the information for identification of the point-to-point communication and to remove the information for identification of the point-to-point communication from the packet(s) that belongs to the point-to-point communication.

4. The control apparatus according to any one of claims 1 to 3, further comprising:
means for recalculating a path(s) for the packet(s) that belongs to the point-to-point communication based on change of a network topology formed by the relay apparatuses and setting a packet forwarding rule(s) for forwarding the packet(s) that belongs to the point-to-point communication along the recalculated path(s) in a relay apparatus(es) on the recalculated path(s).

5. The control apparatus according to any one of claims 2 to 4, wherein the control apparatus instructs at least one of the first and third relay apparatuses removed from the path(s) of the point-to-point communication by change of the network topology formed by the relay apparatuses to perform port down of a port(s) that belongs to the trunk(s) used by the point-to-point communication.

6. A communication system, comprising:
two or more first relay apparatuses which form a trunk with a first external relay apparatus;
a second relay apparatus(es) which is connected to at least one of the first relay apparatuses and which is arranged between a destination apparatus that performs a point-to-point communication [and the first relay apparatuses]; and
a control apparatus which controls the first and second relay apparatuses,
wherein the control apparatus includes:
means for receiving a request for a configuration about a point-to-point communication, the request including endpoint information about the point-to-point communication; and
means for determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).

7. The communication system according to claim 6,
wherein two or more third relay apparatuses which form a second trunk with a second external relay apparatus between the destination apparatus that performs the point-to-point communication and the second relay apparatus(es), and
wherein the control apparatus sets a packet forwarding rule(s) which uses the two trunks in the first to third relay apparatuses.

8. The communication system according to claim 7,
wherein the control apparatus instructs at least one of the first relay apparatuses which are connected to the first external relay apparatus to add information for identification of the point-to-point communication to a packet(s) that belongs to the point-to-point communication, and
wherein the control apparatus instructs at least one of the third relay apparatuses which are connected to the second external relay apparatus to determine an output port(s) based on the information for identification of the point-to-point communication and to remove the information for identification of the point-to-point communication from the packet(s) that belongs to the point-to-point communication.

9. The communication system according to any one of claims 6 to 8, wherein the control apparatus further comprises: means for recalculating a path(s) for the packet(s) that belongs to the point-to-point communication based on change of a network topology formed by the relay apparatuses and setting a packet forwarding rule(s) for forwarding the packet(s) that belongs to the point-to-point communication along the recalculated path(s) in a relay apparatus(es) on the recalculated path(s).

10. A relay apparatus control method, causing a control apparatus, which is connected to two or more first relay apparatuses which form a trunk with a first external relay apparatus, which is connected to a second relay apparatus(es) which is connected to at least one of the first relay apparatuses and which is arranged between a destination apparatus that performs a point-to-point communication [and the first relay apparatuses], and which controls the first and second relay apparatuses, to perform steps of:
receiving a request for a configuration about a point-to-point communication, the request including endpoint information about the point-to-point communication; and
determining, before the point-to-point communication occurs, a path(s) of the point-to-point communication, based on the endpoint information about the point-to-point communication and a packet allocation rule(s) of the first external relay apparatus, and setting a packet forwarding rule(s) for the point-to-point communication which uses the trunk in the first and second relay apparatuses on the path(s).
